(19) Europäisches Patentamt
European Patent Office
Office européen des brevets

(11) Veröffentlichungsnummer: **0 025 037**
**B1**

(12) # EUROPÄISCHE PATENTSCHRIFT

(45) Veröffentlichungstag der Patentschrift: **26.01.83**

(51) Int. Cl.³: **G 02 F 1/33**// C09C1/64

(21) Anmeldenummer: **80900398.1**

(22) Anmeldetag: **06.03.80**

(86) Internationale Anmeldenummer: **PCT/CH 80/00034**

(87) Internationale Veröffentlichungsnummer: **WO WO/80019 (18.09.80 Gazettee 80/21)**

(54) **FLÜSSIGKRISTALL-ANZEIGEZELLE, VERFAHREN ZU IHRER HERSTELLUNG UND ZELLENPLATTE.**

(30) Priorität: **08.03.79 CH 2232/79**

(43) Veröffentlichungstag der Anmeldung: **18.03.81 Patentblatt 81/11**

(45) Bekanntmachung des Hinweises auf die Patenterteilung: **26.01.83 Patentblatt 83/04**

(84) Benannte Vertragsstaaten: **CH DE FR GB NL**

(56) Entgegenhaltungen:
**DE A 1 519 311**
**DE A 2 630 731**
**DE A 2 639 675**
**DE A 2 716 609**
**US A 2 885 366**
**US A 3 857 627**

(73) Patentinhaber: **BBC Aktiengesellschaft Brown, Boveri & Cie.**
**Haselstrasse**
**CH-5401 Baden (CH)**

(72) Erfinder: **KAUFMANN, Meinolph**
**Steinäckerstrasse 18**
**CH-5442 Fislisbach (CH)**

**EP 0 025 037 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Flüssigkristall-Anzeigezelle, Verfahren zu ihrer Herstellung und Zellenplatte

## Technisches Gebiet der Erfindung

Die Erfindung betrifft eine Flüssigkristall-Anzeigezelle, im folgenden kurz auch als FK-Zelle bezeichnet, die zwei mit Elektroden beschichtete Zellenplatten besitzt, welche eine Flüssigkristallmasse einschliessen ; mindestens die erste Zellenplatte ist transparent und die zweite Zellenplatte ist mindestens bereichsweise mit einer anhaftenden zelleninnenseitigen Reflektorschicht versehen, die schuppenförmige Aluminiumteilchen als Reflektorpartikel und eine Bindephase für diese enthält. Die Erfindung betrifft auch ein Verfahren zur Herstellung solcher FK-Zellen sowie eine Platte zur Verwendung in derartigen Zellen.

## Stand der Technik

Bestimmte Typen von FK-Zellen (auch LC-displays oder LCD's genannt) benötigen eine das einfallende Licht mindestens teilweise reflektierende Schicht, z.B. eine mehr oder weniger spiegelnde Schicht, die zelleninnenseitig über der Elektrodenbeschichtung der vom Betrachter entfernteren Platte als sogenannter Innenreflektor angeordnet ist und z.B. durch Aufdampfen aufgetragen wird.

Um bestimmte Nachteile der üblichen, z.B. aufgedampften Innenreflektoren von FK-Zellen bezüglich Betrieb und Fertigungskosten auszuschalten, ist es z.B. aus den DE-OS 26 39 675 und 27 16 609 der Anmelderin bekannt, die Innenreflektorschicht im wesentlichen aus einer Vielzahl von Metallplättchen oder -schuppen zu bilden, insbesondere aus Aluminiumpigment oder « Aluminiumbronze », d.h. schuppenförmigen Aluminiumteilchen.

Hierzu kann eine pastenförmige Mischung, welche die Aluminiumteilchen und ein temporäres Bindemittel enthält, auf die mit dem Innenreflektor zu versehende Oberfläche der entsprechenden Zellenplatte aufgetragen werden, z.B. durch Siebdruck. Gemäss der genannten DE-OS 26 39 675 kann der Mischung Glaslotpulver zugesetzt werden, das nach dem Einbrennen als dauerndes Bindemittel der Schicht, d.h. als Bindephase wirkt. Gemäss der genannten DE-OS 27 16 609 ist es aber auch möglich, in der Mischung nur ein temporäres Bindemittel zu verwenden und dieses beim Einbrennen praktisch rückstandslos zu entfernen. Die auf schuppenförmigen Aluminiumteilchen durch Luftsauerstoff spontan gebildete oder durch Behandlung gezielt erzeugte äussere Aluminiumoxidschicht wirkt in beiden Fällen als Bindephase und elektrischer Isolator, der eine elektrische Ueberbrückung von getrennten Elektrodenbereichen der mit dem Innenreflektor versehenen FK-Zellenplatte vermeiden soll.

Die Verwendung von Glaslot in der zur Herstellung des Innenreflektors verwendeten Mischung ist aus mehreren Gründen problematisch und ergibt jedenfalls bei der technischen Fertigung von FK-Zellen keine optimalen und ausreichend dünnen Innenreflektorschichten, was wahrscheinlich durch die relativ hohe Zähigkeit des Glaslots in geschmolzenem Zustand und/oder die mangelnde Homogenität der Mischung bedingt ist.

Die praktisch nur aus metallischen Aluminiumschuppen und deren Oxidaussenschichten gebildeten Innenreflektoren gemäss DE-OS 27 16 609 können zwar genügend dünn ausgebildet werden, haben aber den Nachteil, dass die für viele Typen von FK-Zellen wünschbare oder notwendige Senkrechtorientierung, wie sie etwa durch Auftragen einer Silanschicht auf die Innenfläche einer Zellenplatte erzielt werden kann, auf dem Innenreflektor praktisch nicht möglicht ist, weil dieser eine zu ungleichmässige Oberfläche hat. Auch das bekannte mechanische Reiben der Innenfläche der Zellenplatte, das eine Parallelorientierung der Flüssigkristallmoleküle bewirkt und für manche Typen von FK-Zellen erforderlich ist, lässt sich auf den bekannten Innenreflektorschichten nicht durchführen, weil diese nicht wischfest sind bzw. nicht ausreichend fest auf der Zellenplatte haften.

Schliesslich hat eine praktisch nur aus oberflächlich oxidierten Aluminiumschuppen bestehende Innenreflektorschicht den Nachteil einer für manche Zwecke ungenügenden gegenseitigen elektrischen Isolation der Schuppen, insbesondere, wenn beim Einbrennen der Schicht mit Temperaturen zwischen 400 und 500 °C gearbeitet wird und/oder wenn die Elektrodenbereiche oder -segmente der den Innenreflektor tragenden Platte Trennzonen von $< 50\ \mu m$ aufweisen.

Aufgabe der Erfindung ist es, eine FK-Anzeigezelle der eingangs genannten Art anzugeben, bei welcher die Reflektorschicht fest auf der Zellenplatte haftet, ausreichend dünn und wischfest ist und die schuppenförmigen Aluminiumteilchen in genügendem Masse gegeneinander elektrisch isoliert sind. Aufgabe der Erfindung ist auch ein Verfahren zur Herstellung einer FK-Anzeigezelle mit den eben genannten Eigenschaften.

## Erfindung

Bei der erfindungsgemässen FK-Anzeigezelle dient als Bindephase für die Aluminiumpigmentteilchen der Reflektorschicht eine praktisch homogene, transparente und mindestens überwiegend aus $SiO_2$

bestehende schichtförmige Matrix, in welcher die Aluminiumpigmentteilchen eingebettet sind. Die Reflektorschicht hat meist eine mittlere Dicke von 0,3 bis 5 µm, vorzugsweise von 0,5 bis 2 µm, und besteht vorzugsweise zu mindestens 20 % ihres Gewichtes aus $SiO_2$ und zum restlichen Teil praktisch aus den schuppenförmigen Aluminiumteilchen.

Ueberraschenderweise wurde gefunden, dass eine derartige Reflektorschicht in einfacher und kostengünstiger Weise erhalten werden kann, indem man der zum Auftragen der Aluminiumteilchen auf die entsprechende Zellenplatte verwendeten Mischung oder einer Vormischung mindestens ein bei Normaltemperatur flüssiges organisches Orthosilicat der Formel (I)

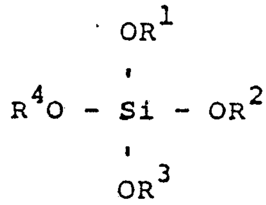

zusetzt, in der $R^1$, $R^2$, $R^3$ und $R^4$ gleiche oder verschiedene organische Reste, vorzugsweise Alkylreste mit jeweils 1 bis 4 C-Atomen, insbesondere Ethylreste sind, die in Form der entsprechenden Hydroxylverbindungen (d.h. als $R^1OH$, $R^2OH$, $R^3OH$ bzw. $R^4OH$) flüchtig sind (Kp höchstens 150 °C); das organische Orthosilicat wird vor, während oder nach dem Auftragen der Mischung hydrolysiert, was allgemein auf acidolytischem Wege, d.h. in Gegenwart einer Säure, erfolgt. Zweckmässigerweise wird eine flüchtige Mineralsäure, wie konzentrierte Salzsäure, verwendet, die der Mischung oder einer Vormischung zugesetzt wird. Die Hydrolyse und insbesondere die bevorzugte Acydolyse läuft bei Raumtemperatur oder mässig erhöhten Temperaturen (bis ca. 120 °C) spontan und führt zur Bildung von Kieselsäure, die ganz oder teilweise aus Orthokieselsäure bestehen kann; beim nachfolgenden Einbrennen (Erhitzen auf 300 bis 550 °C, vorzugsweise 430 bis 470 °C) wird die Kieselsäure praktisch vollständig zu $SiO_2$ dehydratisiert.

Auf diese Weise entsteht eine an der Zellenplatte fest haftende Reflektorschicht, deren Dicke im gewünschten Bereich von 0,3 bis 5 µm durch die Dicke der aufgetragenen Schicht und die Zusammensetzung der Schicht gesteuert werden kann.

Vorzugsweise enthält die als Schicht aufgetragene Mischung ausserdem ein temporäres Bindemittel, um die Schichtbildung nach an sich üblichen Druckverfahren, wie Siebdruck, zu erleichtern. Ein solches temporäres Bindemittel, meist ein organisches Verdickungsmittel in organischer Lösung, soll beim abschliessenden Einbrennen praktisch rückstandsfrei entfernt werden. Siebdruck-Bindemittel, die dieser Forderung entsprechen, sind im Handel erhältlich, z.B. viskose Lösungen von thermisch labilen Polymeren, wie Nitrocellulose, in organischen Lösungsmitteln, wie Amylacetat. Derartige Mischungen werden zweckmässig nach dem Aufdrucken und vor dem abschliessenden Einbrennen bei Temperaturen von 80 bis 150 °C auf der Platte getrocknet.

Geeignete organische Orthosilicate der obigen Formel (I) sind technisch erhältlich, wie z.B. das bevorzugte Ethylsilicat $Si(OC_2H_5)_4$, oder können nach an sich bekannten Verfahren erhalten werden, etwa durch Umsetzung gemäss $ROH + SiX_4 \rightarrow Si(OR)_4$, wobei R die Bedeutung von $R^1$, $R^2$, $R^3$ oder $R^4$ hat und X Halogen, insbesondere Chlor, bedeutet.

Da die verwendeten organischen Orthosilicate (I) bei Normaltemperatur flüssig sind, können sie ohne Schwierigkeiten homogen in der flüssigen Aussenphase der Mischung mit den schuppenförmigen Aluminiumteilchen verteilt werden, insbesondere, wenn die Aussenphase ein temporäres Bindemittel der oben genannten Art enthält.

Durch Hydrolyse und Dehydratisierung entsteht aus der Verbindung (I) entsprechend dem Reaktionsschema

$$Si(OR)_4 \rightarrow Si(OH)_4 \rightarrow SiO_2$$

eine überwiegend und vorzugsweise praktisch nur aus $SiO_2$ bestehende schichtförmige Matrix, die praktisch homogen und transparent ist, und in der die Aluminiumteilchen eingebettet sind.

Die Aluminiumteilchen sind schuppenförmig, d.h. haben eine im Verhältnis zum grössten Teilchendurchmesser sehr kleine Dicke, z.B. in der Grössenordnung von 0,1 µm, und grösste Teilchendurchmesser in der Grössenordnung von 1 bis 10 µm. In einer auf die Zellenplatte aufgetragenen frischen Mischungsschicht orientieren sich derartige Teilchen normalerweise im wesentlichen parallel zur Plattenoberfläche.

Es sei hier vermerkt, dass die Bildung von durch Aufdampfen erzeugten $SiO_2$-Schichten in der Halbleitertechnik und auch für FK-Anzeigezellen üblich ist. Abgesehen davon, dass das Aufdampfen eine vergleichsweise aufwendige Operation ist, eignet sich diese Methode keinesfalls zur Bildung einer einbettenden $SiO_2$-Matrix als Bindephase für Aluminiumteilchen, jedenfalls nicht im Rahmen einer technischen Fertigung. Anderseits ist die z.B. in der DE-OS 15 19 311 bzw. der US-PS 2 885 366

beschriebene Verwendung von anorganischen wasserlöslichen Silicaten zur Bildung von $SiO_2$ in Anstrichmassen auf Basis von Metallpigment bzw. Aluminiumpulver für die Herstellung von Innenreflektoren von FK-Zellen aus verschiedenen Gründen untauglich : bei der Bildung von $SiO_2$ aus wasserlöslichen anorganischen Silicaten, wie Wasserglas, bilden sich wasserlösliche Salze, z.B. nach dem Schema

$$Na_2SiO_3 + 2\,HCl \rightarrow SiO_2 + 2\,NaCl + H_2O$$

die sich thermisch nicht entfernen lassen und die Bildung einer praktisch homogenen Einbettungsmatrix aus $SiO_2$ verunmöglichen. Ferner erfordert diese Methode ein wässriges System und führt zur Bildung von hydratisiertem $SiO_2$, das sich normalerweise nicht zu dünnen und fest anhaftenden Schichten dehydratisieren lässt.

Im Zusammenhang mit Farbmassen auf Basis von Metall- bzw. Aluminiumpigment ist in der DE-OS 26 30 731 ferner die Verwendung von organischen Silanverbindungen der Formel $R\text{-}Si(OR)_3$ als Zusatzmittel vorgeschlagen (R = Alkyl), die zur Bildung von das Pigment schützenden organischen Siliciumpolymeren, nämlich Organosiloxanen, führen. Organosiloxane sind aber für ihre thermische Beständigkeit bekannt und die rückstandsfreie thermische Entfernung der organischen Anteile aus so gebildeten Schichten ist praktisch nicht möglich, d.h. eine transparente und praktisch homogene Einbettung der Aluminiumteilchen in einer anorganischen Matrix ist auf diesem Wege nicht erzielbar.

Kurze Beschreibung der Zeichnungen

Nachfolgend wird die Erfindung anhand der Fig. 1 und 2 ausführlich erläutert. Es zeigen :

Figur 1 die schematische und vergrösserte, abgebrochene Schnittdarstellung einer erfindungsgemässen Flüssigkristallzelle mit Innenreflektor und

Figur 2 die schematische und vergrösserte, abgebrochene Schnittdarstellung des Zustandes der zur Bildung des Innenreflektors aufgetragenen frischen Schicht.

Bevorzugte Ausführungsform der Erfindung

Im Schema einer FK-Zelle 10 von Fig. 1 sind die üblichen Randbereiche sowie die elektrischen Leitungen zur Vereinfachung weggelassen.

Die FK-Zelle 10 ist aus zwei Zellenplatten 1, 2 aufgebaut die in an sich bekannter Weise mit Elektrodenschichten 3, 4 belegt sind. Jede der Elektrodenschichten 3, 4 besteht aus mehreren Segmenten, z.B. 3a, 3b, 3c bzw. 4a, 4b, 4c, mit dazwischen liegenden Trennzonen 14, 15. Die Trennzonen 15 sind z.B. verhältnismässig breit (> 50 μm), während die Trennzonen 14 schmal (< 50 μm) ausgebildet sind ; bei derartig schmalen Trennzonen treten bei Verwendung bekannter Reflektorschichten bestimmte Probleme auf, wie weiter unten erläutert.

Eine übliche FK-Masse 5, d.h. das dielektrische Medium der Anzeigezelle, liegt als Schicht mit einer Dicke von z.B. 5 bis 10 μm zwischen den Zellenplatten 1, 2 und ist randseitig in an sich bekannter Weise durch nicht dargestellte Abstandselemente dicht in der Zelle 10 eingeschlossen.

Im Fall einer beispielsweise nach dem sogenannten « Guest/Host »-Prinzip (siehe z.B. T. J. Scheffer, J. Appl. Phys. 24/1973/4799) arbeitenden Zelle besitzt die FK-Masse 5 in feldfreiem Zustand eine lichtabsorbierende, schraubenförmig gewundene Molekularorientierung, die beim Anlegen eines elektrischen Feldes zwischen den Elektroden 3 bzw. 4 in eine nicht oder weniger lichtabsorbierende gleichförmige Molekülorientierung umgewandelt werden kann. Die in Fig. 1 dargestellte FK-Zelle 10 wird dazu in Reflexion betrieben und frontseitig beleuchtet. Ebenfalls frontseitig befindet sich der Betrachter 13. Das in die FK-Zelle 10 einfallende Licht wird im Bereich der nichtabsorbierenden gleichförmigen Molekularorientierung der FK-Schicht 5 durchgelassen, an der Reflektorschicht 9 reflektiert bzw. gestreut und durch die transparenten Elektroden 3 sowie die ebenfalls transparente Zellenplatte 1 auf den Betrachter 13 zurückgeworfen.

Geeignete FK-Massen für die Schicht 5 zum Betrieb nach dem « Guest/Host »-Prinzip sind bekannt und bestehen z.B. aus einer nematischen Grundsubstanz mit positiver dielektrischer Anisotropie, etwa einer Mischung aus p-Butoxy-, p-Hexyloxy- und p-Octanoyloxybenzyliden-p-aminobenzonitril, 5 bis 15 % einer optisch aktiven Substanz, z.B. Cholesterylbenzoat und 0,2 bis 1 % pleochroitischem Farbstoff.

Wie an sich z.B. aus den US-PS 3 854 793 bzw. 3 973 057 bekannt ist, ist auf die Reflektorschicht 9 eine Schicht 8, z.B. aus einem hierfür bekannten Silan, aufgetragen, um die FK-Moleküle an der Grenzfläche senkrecht zu orientieren. Die Verwendung einer senkrecht orientierenden Schicht 8 ist aber nicht erfindungswesentlich, sondern nur für bestimmte Verwendungszwecke bevorzugt. Alternativ kann die Reflektorschicht auch nach der z.B. aus Mol. Cryst. and Liqu. Cryst. 23 (1973) 187 ff. bekannten Methode gerieben sein, um eine parallele Molekularorientierung der FK-Moleküle an der Grenzfläche zu bewirken.

Zu betonen ist, dass erfindungsgemässe FK-Zellen mit entsprechenden, an sich bekannten Modifikationen bezüglich FK-Masse auch für andere Betriebsarten als für « Guest/Host »-Zellen verwendet werden können. z.B. als nematische Drehzellen der in DE-OS 24 22 509 beschriebenen Art, die nur einen

Polarisator (nicht in Fig. 1 dargestellt) benötigen.

Erfindungswesentlich für alle Betriebsarten der FK-Zelle 10 ist hingegen die Struktur der Reflektorschicht 9, die erfindungsgemäss eine praktisch homogene, transparente und mindestens überwiegend — vorzugsweise praktisch vollständig — aus $SiO_2$ bestehende schichtförmige Matrix 7 besitzt, in welcher die als Reflektorpartikel dienenden schuppenförmigen Aluminiumteilchen oder -blättchen 6 eingebettet sind.

Vorzugsweise wird eine höchstens 5 µm dicke Innenreflektorschicht 9 verwendet, die als Bindephase eine praktisch homogene Einbettungsmatrix oder Aussenphase für die Aluminiumteilchen 6 besitzt und nicht wie die aus DE-OS 26 39 675 bzw. 27 16 609 bekannte Reflektorschicht im wesentlichen von diskontinuierlichem Aluminiumoxid mit oder ohne dem für die Bildung dünner Reflektorschichten mit homogener Bindephase praktisch ungeeigneten Glaslot aufgebaut ist.

Vorzugsweise besteht die praktisch homogene Matrix 7 praktisch vollständig aus $SiO_2$, das durch saure Hydrolyse mindestens einer Verbindung (I) zur Bildung von Kieselsäure und nachfolgender Dehydratisierung durch Einbrennen, d.h. Erhitzen auf 300 bis 550 °C, in Mischung mit den Reflektorteilchen 6 auf der Platte 2 gebildet ist.

Es liegt jedoch im Rahmen der Erfindung, zusätzlich zu Verbindungen (I) auch entsprechende Verbindungen zu verwenden, bei welchen das Siliciumatom in der Formel (I) durch ein anderes vierwertiges Metallatom, z.B. das Zirkoniumatom, ersetzt ist.

Für die meisten Anwendungszwecke bringt der Einbau von $ZrO_2$ od. dgl. in die Matrix 7 jedoch keine, die entsprechend höheren Aufwendungen rechtfertigenden Vorteile.

Eine im wesentlichen aus $SiO_2$ bestehende und praktisch homogene Matrix oder Aussenphase 7 der Reflektorschicht 9 bietet beachtliche Vorteile erfindungsgemässer FK-Zellen :

1) Es wurde gefunden, dass die aus Aluminium bestehenden Reflektorteilchen 6 in der Matrix 7 mit einem elektrischen Widerstand von mindestens 10 Megohm pro Quadrat in einer zu den Elektroden 3, 4 parallelen Richtung voneinander bzw. gegeneinander isoliert sind.

Für die praktische Anwendung bedeutet dies, dass sehr schmale Trennzonen 14 von < 50 µm zwischen den Segmenten 4b, 4c der Elektrodenschicht 4 ohne die Gefahr einer elektrischen Ueberbrückung der Trennzonen 14 durch die Reflektorteilchen 6 verwendet werden können. Bei den bekannten Reflektorzellen sind solche schmalen Trennzonen nicht möglicht.

2) Die zelleninnenseitige Oberfläche einer praktisch homogenen Matrix 7 aus $SiO_2$ bietet eine ausreichend glatte Struktur, um eine beispielsweise aus Silan bestehende Schicht 8 zur an sich bekannten Senkrechtorientierung der FK-Moleküle an der Grenzfläche der FK-Schicht 5 leicht und gleichmässig aufzubringen ; auch die Haftung einer solchen Silanschicht 8 auf der Oberfläche der Matrix 7 ist überraschend gut.

Dies ist praktisch für « Guest/Host »-Anzeigen sehr bedeutsam, weil mit einer derartig erzielten Senkrechtorientierung volle Kontrastwirkungen bereits bei Betriebsspannungen von weniger als 10 Volt erzielt werden können. Bei dem bekannten Reflektorzellen lassen sich solche Orientierungsschichten nicht gut auftragen, weswegen höhere Betriebsspannungen nötig sind.

3) Die Haftung der $SiO_2$-Matrix auf der Platte 2 bzw. deren Elektrodenschicht 4 ist hervorragend ; dies zusammen mit der Tatsache einer festen und schützenden Einbettung der Reflektorteilchen 6 in der $SiO_2$-Matrix 7 ermöglicht eine mechanische Oberflächenbearbeitung der Innenreflektorschicht 9 ohne Schaden für deren Funktion.

Dies ist praktisch für das oben erwähnte, an sich bekannte Reiben zur Parallelorientierung der FK-Moleküle an einer Grenzfläche zwischen der freien (d.h. nicht wie in Fig. 1 mit der Schicht 8 versehenen) Oberfläche der Reflektorschicht 9 und der FK-Masse 5 bedeutsam, weil eine derartige Orientierung für Drehzellen notwendig ist. Die bekannten Reflektorzellen können nicht gerieben werden.

4) Reflektorschichten 9 mit in der $SiO_2$-Matrix 7 eingebetteten Reflektorteilchen 6 lassen sich fertigungstechnisch einfach und billig herstellen, z.B. indem eine zur Bildung der Schicht befähigte Mischung der Aluminiumteilchen 6 auf die mit der Elektrodenschicht 4 versehene Zellenplatte 2 (z.B. durch Aufdrucken) aufgebracht und thermisch behandelt wird. Im Prinzip kann z.B. nach den aus DE-OS 26 39 675 und 27 16 609 fertigungstechnisch vorteilhafte Siebdruckmethoden gearbeitet werden, wenn der zur Herstellung der Innenreflektorschicht verwendeten Siebdruckpaste vor dem Aufdrucken mindestens eine Verbindung (I) und vorzugsweise ein flüchtiger Katalysator für die Hydrolyse, z.B. Salzsäure, zugemischt wird.

5) Ein für die Fertigung, aber auch für die Eigenschaften der erfindungsgemässen FK-Zelle bedeutsamer weiterer Vorteil der $SiO_2$-Matrix ist der Befund, dass der beim Einbrennen bereits bei Temperaturen von etwa 400 °C beachtliche Aluminium-Diffusionsdruck und die dadurch gedingte Metaldiffusion in der $SiO_2$-Matrix 7 keine signifikante Verschlechterung der elektrischen Isolation der Aluminiumteilchen 6 bewirkt. Dies bedeutet praktisch, dass ohne Nachteil bei Einbrenntemperaturen von über 400 °C, vorzugsweise 430 bis 470 °C, gearbeitet werden kann, was eine im Vergleich zum Stand der Technik raschere Fertigung und weniger Ausschuss zur Folge hat.

6) Die bemerkenswerte Wischfestigkeit der $SiO_2$-Matrix 7 bzw. der Innenreflektorschicht 9 erfindungsgemässer FK-Zellen sowie der ebenfalls zur Erfindung gehörenden Platte mit anhaftender Reflektorschicht 9 erleichtert allgemein die Handhabung der Platten sowie den Zusammenbau der FK-Zelle, weil die Reflektorschicht sehr viel weniger empfindlich gegen mechanische Beschädigungen als

die wenig abriebfesten und hochgradig kratzempfindlichen Reflektorschichten gemäss DE-OS 26 39 675 und 27 16 609 ist.

Im folgenden wird das ebenfalls zur Erfindung gehörende Verfahren zur Herstellung von FK-Anzeigezellen näher erläutert. Hierbei ist zunächst zu bemerken, dass die dem Fachmann geläufigen Schritte bei der Herstellung der Zellen, wie das Beschichten geeigneter Zellenplatten mit Elektroden bzw. Elektrodensegmenten, der Zusammenbau der Platten mit randseitiger Dichtung, das Auswählen und Einfüllen der FK-Masse in die bis auf eine Einfüllöffnung geschlossene Zelle, das Verschliessen der Zelle und die elektrische Verbindung der Zelle hier nicht erläutert werden. Vielmehr wird auf die einschlägige Literatur zum Stand der Technik verwiesen ; insbesondere ist die Herstellung von FK-Zellen-Innenreflektorschichten auf Basis von Metall- bzw. Aluminiumpigment in der DE-OS 27 16 609 beschrieben, indem — unter Bezug auf Fig. 2 der vorliegenden Zeichnung — auf die in der fertigen Zelle betrachterseitig hintere Zellenplatte 2, und zwar auf deren mit Elektroden 4 bzw. Elektrodensegmenten 4a, 4b, 4c versehene Seite, mindestens bereichsweise eine Schicht aus einer Mischung bzw. Siebdruckpaste 12 aufgetragen und eingebrannt wird, die schuppenförmige Aluminiumteilchen 6 enthält.

Wie beim bekannten Verfahren ist auch beim erfindungsgemässen Verfahren die Mindesttemperatur bzw. Dauer des Einbrennens zunächst durch die Forderung bedingt, dass alle flüchtigen Anteile der Mischung sicher entfernt werden müssen. Beim erfindungsgemässen Verfahren kommt hinzu, dass die $SiO_2$-Matrix 7 (Fig. 1) gebildet werden muss, was in letzter Stufe wahrscheinlich auf der thermischen Dehydratisierung von Kieselsäure (in « monomerer » Form, d.h. als Orthokieselsäure und/oder in einer mehr oder weniger kondensierten Form, d.h. als Polykieselsäure) beruht. Es versteht sich, dass das $SiO_2$ der Matrix als $(SiO_2)_n$ aufzufassen ist. Eine eindeutige Bestimmung und Angabe des Wertes von n ist allerdings in der Regel nicht möglich, aber praktisch auch nicht erforderlich, da es hier primär auf die oben beschriebenen makroskopisch feststellbaren Eigenschaften der Transparenz, Homogenität und Abreib- oder Wischfestigkeit ankommt.

Als schuppenförmige Aluminiumteilchen 6 können bekannte und technisch erhältliche Aluminiumpigmente oder -bronzen verwendet werden, deren Teilchen schuppen- oder plättchenförmig sind. Im allgemeinen liegt die Dicke der Teilchen im Bereich von 0,05 bis 0,5 µm, vorzugsweise bei etwa 0,1 µm, und sind die mittleren Flächenabmessungen der Teilchen mindestens 10 mal und vorzugsweise 50 bis 200 mal grösser als deren Dicke. Abmessungen der Aluminiumteilchen 6 in der Grössenordnung von $10 \times 10 \times 0,1$ µm sind für viele Zwecke der Erfindung geeignet. Spezielle Beispiele für geeignete Teilchen 6 sind z.B. in « Pigment Handbook », Band 1 (1973), 786-806 (Herausgeber : T. C. Patton) beschrieben.

Der Gewichtsanteil der Aluminiumteilchen an der gemäss Fig. 2 auf die Platte 2 aufgetragenen Mischung bzw. Siebdruckpaste 12 ist nicht besonders kritisch, da diese Mischung normalerweise noch flüchtige Anteile enthält, die vor oder im Zuge der Bildung der fertigen Reflektorschicht 9 (Fig. 1) durch thermische Behandlung entfernt werden. Ein Aluminiumteilchenanteil der Mischung von 1 bis 20 Gew.% ist für viele Zwecke geeignet.

Die fertige Schicht 9 kann ihrerseits mehr oder weniger Aluminiumteilchen 6 enthalten, je nachdem, ob eine das einfallende Licht praktisch total reflektierende oder eine nur teilreflektierende transparente Schicht 9 gewünscht ist. Teilweise reflektierende Schichten 9 gehören ebenfalls zur Erfindung und sind z.B. für im Durchlicht zu betrachtende FK-Zellen brauchbar.

Im allgemeinen enthält die fertige Schicht 9 die Aluminiumteilchen 6 in einem Gewichtsanteil von 5 bis 90 %, vorzugsweise 10 bis 80 % und insbesondere 30 bis 70 %, und als restlichen Teil praktisch nur $SiO_2$.

Um die $SiO_2$-Matrix 7 der fertigen Schicht 9 zu bilden, wird zur Bildung von Kieselsäure in der Mischung bzw. Druckpaste 12 mindestens eine Verbindung der Formel (I) verwendet, vorzugsweise Tetraethylsilicat ($Si(OC_2H_5)_4$), die der Mischung bzw. einer Vormischung einverleibt wird.

Die Verwendung eines Katalysators für die Hydrolyse von (I) zur Bildung von Kieselsäure ist in der Regel zweckmässig. Als Katalysator bevorzugt werden flüchtige Mineralsäuren, wie Salzsäure, z.B. in relativ konzentrierter Form (20 bis 30 Gew.% HCl in wässriger Lösung).

Die Verbindung (I) und der Hydrolysekatalysator können in der Mischung bzw. Druckpaste 12 verteilt werden ; alternativ kann eine alle Komponenten ausser den Aluminiumteilchen enthaltende Vormischung hergestellt und nachträglich mit den Aluminiumteilchen 6 gleichmässig vermischt werden. Eine gewisse Hydrolyse von (I) in einer solchen Vormischung ist meist nicht nachteilig, soweit die Konsistenz (Siebdruckfähigkeit) dadurch nicht leidet.

Aus den oben für den Aluminiumteilchenanteil erwähnten Gründen ist primär nicht der Mengenanteil der Verbindung (I) in der Mischung 12 (Fig. 2), sondern das Gewichtsverhältnis des gebildeten $SiO_2$ zum Aluminiumteilchenanteil in der fertigen Schicht 9 (Fig. 1) bedeutsam. Ferner zu berücksichtigen ist die durch Umwandlung der Verbindung (I) in $SiO_2$ bedingte Gewichtsverminderung.

Im allgemeinen ist es zweckmässig, in die Mischung 12 bzw. die Vormischung anteilmässig eine solche Gewichtsmenge der Verbindung (I) einzuführen, die etwa 100 bis 300 %, vorzugsweise etwa 200 %, des Gewichtsanteiles der Aluminiumteilchen entspricht.

Der Anteil des Hydrolysekatalysators an der Mischung 12 bzw. der Vormischung hängt allgemein von der Konzentration der Verbindung (I) in der Mischung bzw. Vormischung und der jeweils gewünschten

Hydrolysebedingungen ab. Als beispiel ist ein Katalysatoranteil im Bereich von 1 bis 25 % des Gewichtes der Verbindung (I) zu nennen. Konzentrierte Salzsäure kann z.B. in Anteilen von 2 bis 20 % des Gewichtes an $Si(OC_2H_5)_4$ verwendet werden.

Vorzugsweise enthält die Mischung 12 einen gewichtsmässig überwiegenden Anteil eines sogenannten Vehikels, d.h. das oben erwähnte temporäre Bindemittel, das die gründliche Vermischung der Komponenten (Al-Teilchen, Verbindung (I) und Hydrolysekatalysator) und das schichtförmige Auftragen der Mischung 12 auf die Platte 2 erleichtert. Als temporäres Bindemittel geeignet sind übliche Siebdruckpasten, deren Komponenten thermisch restlos entfernt werden können. Solche Pasten sind technisch erhältlich und bestehen meist aus einem thermisch relativ labilen organischen Polymer, wie Nitrocellulose, das in einem organischen Lösungsmittel gelöst oder gequollen ist. Im allgemeinen enthält die Mischung 12 mindestens 50 Gew.%, vorzugsweise etwa 70 bis 95 Gew.%, an temporärem Bindemittel.

Die Mischung bzw. Paste 12 kann nach an sich bekannten Verfahren, z.B. durch Siebdruck, auf die Platte 12 aufgetragen werden, wie dies in Fig. 2 schematisch dargestellt ist.

Durch die Dicke der aufgedruckten Schicht 12 und deren Gehalt an Al-Teilchen bzw. Verbindung (I) kann die Dicke der fertigen Reflektorschicht 9 (Fig. 1) gesteuert werden. Um Reflektorschichten 9 im bevorzugten Dickenbereich von 0,3 bis 5 µm zu erzeugen, sollte die Dicke der frisch aufgedruckten Schicht (Fig. 2) etwa 3 bis 50 µm betragen, wenn die Mischung zu etwa 90 Gew.% aus temporärem Bindemittel und im übrigen aus Al-Teilchen, Verbindung (I) und Hydrolysekatalysator in den oben erwähnten relativen Anteilen besteht. Da die mit Siebdruck problemlos erzielbaren Dikken der Druckschicht meist im Bereich von etwa 5 bis 50 µm liegen, wird die bevorzugte Verwendung von Mischungen 12 mit einem Gehalt von 70 bis 95 Gew.% an temporärem Binder ohne weiteres verständlich.

Die vorzugsweise durch Siebdruck aufgetragene frische Schicht (Fig. 2) kann gewünschtenfalls vorgetrocknet werden, z.B. bei Temperaturen von 80 bis 150 °C, je nach Art des Organischen Lösungsmittels im temporären Bindemittel, um mindestens einen Teil des Lösungsmittels zu entfernen. Die hydrolytische Bildung von Kieselsäure aus der Verbindung (I) bzw. die Kondensation von Orthokieselsäure zu Polykieselsäure kann vor, während oder nach dem Auftragen der Mischung 12 auf die Platte 2 beginnen und bereits vor dem Einbrennen abgeschlossen sein.

Das Einbrennen der gegebenenfalls vorgetrockneten Schicht aus der Mischung 12 soll eine praktisch vollständige Entfernung bzw. rückstandsfreie Zersetzung des temporären Bindemittels, der durch Hydrolyse der Verbindung (I) entstehenden organischen Komponenten und des durch Dehydratisierung von Kieselsäure gebildeten Wassers bewirken.

Hierzu sind allgemein Temperaturen von 300 bis 550 °C, vorzugsweise 400 bis 500 °C und insbesondere 430 bis 470 °C geeignet. Höhere Temperaturen sind wegen der Eigenschaften der beteiligten Stoffe (Schmelzpunkt von Aluminium, Erweichung des Materials der Platten usw.) nicht zweckmässig, während Temperaturen unter 300 °C die vollständige Entfernung der organischen Komponenten bzw. des Dehydratationswassers nicht gewährleisten. Die zweckmässige Dauer des Einbrennens hängt von der Temperatur ab. Typische Werte liegen zwischen 5 und 60 Minuten. Bei den bevorzugten Einbrenntemperaturen sind Zeiten von 10 bis 30 Minuten typisch.

In den folgenden Beispielen sind Teile und Prozente auf das Gewicht bezogen.

## Beispiel 1

A. Zunächst wird eine Siebdruckpaste als temporäres Bindemittel aus 8 Teilen Amylacetat und 1 Teil Nitrocellulose hergestellt.

B. 100 Teile des Bindemittels gemäss (A) werden mit 2 Teilen konzentrierter wässriger HCl-Lösung (38 %ig, Dichte 1,19, chemisch rein) und mit 10 Teilen Tetraethylsilicat ($Si(OC_2H_5)_4$) gleichmässig vermischt.

C. Die erhaltene Paste wird mit 5 Teilen Aluminiumteilchen (technisches Produkt « 952-Al-Flake Powder » der Firma U.S. Bronze Powders Inc., Flemington, N.J.) durch intensives Rühren gleichmässig vermischt, das vorher auf eine maximale Teilchengrösse von $\leq$ 10 µm gesiebt worden war. Die Dicke der Schuppen lag bei etwa 0,1 µm.

D. Die Paste gemäss (C) wird unter Verwendung von Polyestergewebe (« Estal Mono 90M » eingetragenes Warenzeichen der Schweizerischen Seidengazefabrik, Thal SG) als Drucksieb in einer technischen Siebdruckanlage auf übliche, mit segmentierten Elektrodenflächen aus Indiumoxid/Zinnoxid (4a, 4b, 4c) mit Dicken von ca. 300 nm versehene FK-Zellenplatten 2 aus Glas (Fig. 2) in einer Druckschichtdicke von etwa 8 µm aufgedruckt (Dickschicht), so dass praktisch die gesamten anzeigeaktiven Bereiche der Platten mit Druckschicht bedeckt werden. Dann wird die mit der Dickschicht versehene Platte 5 Minuten bei 160 °C getrocknet. Dabei wird praktisch das gesamte Amylacetat entfernt und es blieb eine praktisch feste zusammenhängende Schicht zurück.

E. Die gemäss Absatz (D) erhaltenen Platten werden im Ofen bei 480 °C während 5 Minuten eingebrannt und abkühlen gelassen. Die Platten sind nun mit einer 0,8 µm dicken Reflektorschicht 9 (Fig. 1) versehen, die einfallendes Licht praktisch total reflektiert bzw. streut. Die Aluminiumteilchen 6 liegen durchwegs annähernd parallel zur Oberfläche der Platte 2 und sind in einer visuell praktisch homogenen und transparenten (glasähnlich klaren) Matrix eingebettet, die praktisch vollständig aus $SiO_2$ besteht. Die Reflektorschicht 9 haftet fest auf der Platte 2 und ist wischfest : an einem unter kräftigem

Fingerdruck (entsprechend etwa 50 Kilopascal) über die Schicht 9 geführten Papiervlies sind praktisch keine Aluminiumteilchen festzustellen. Die Schicht 9 kann ferner zu Parallelorientierung in an sich bekannter Weise gerieben werden. Eine auf die Oberfläche von Schicht 9 zur Senkrechtorientierung aufgebaute Silanschicht 8 (Fig. 1) lässt sich leicht und gut verteilen und zeigte eine sehr gute Haftung. Die Aluminiumteilchen 6 sind in den zur Oberfläche der Platte 2 parallelen Richtungen gegeneinander sehr gut isoliert ; der entsprechende elektrische Widerstandswert (Schichtwiderstand) beträgt mindestens 10 MΩ pro Quadrat.

F. Aus den erhaltenen Platten werden nach der in DE-OS 26 39 675 und 27 16 609 beschriebenen Arbeitsweise « Guest/Host »-Anzeigezellen durch Zusammenbau mit entsprechenden Vorderplatten 1 (Fig. 1) hergestellt. Die randseitige Verbindung der Platten 1 und 2 wird durch Aufdrucken eines Steges aus Glaslot auf die vordere oder hintere Platte und Erhitzen der aufeinandergelegten Platten erzielt. Wenn die Reflektorschicht 9 zur Senkrechtorientierung der FK-Moleküle in der Grenzschicht der FK-Masse 5 mit Silanschicht 8 belegt ist, zeigt die erhaltene FK-Zelle 10 bereits bei Betriebsspannungen von unter 10 Volt den vollen Anzeigekontrast. Auch an den schmalen (< 50 μm) Trennzonen 14 der Elektrodenschicht 4 werden bei Betriebsspannung der Zelle 10 keinerlei Kurzschlusseffekte festgestellt. Wenn man anstelle der Mischung gemäss Absatz (A) ein handelsübliches Siebdruckbindemittel (für Dickfilmtechnik) verwendet, werden ähnliche Ergebnisse erzielt.

## Beispiel 2 (Vergleich)

Es wird wie in Beispiel 1, jedoch unter Weglassung des in Absatz (B) beschriebenen Schrittes gearbeitet, d.h. die Siebdruckmasse (A) direkt mit den Aluminiumteilchen (C) vermischt.

Die auf diese Weise nach dem Einbrennen gemäss Absatz (E) erhaltenen Reflektorschichten erweisen sich beim Wischtest als unbeständig, d.h. auf dem für den test verwendeten Papiervlies sind erhebliche Anteile an Aluminiumpigment zu erkennen. Bei mehrmaligem Wischen und jedenfalls beim Reiben zur Parallelorientierung wird die Reflektorschicht im wesentlichen entfernt. Versuche zum Auftragen von Senkrechtorientierungsmaterial (Silan) ergeben sehr ungleichmässige und daher unbrauchbare Schichten ; zum Betrieb von mit solchen Platten gebildeten « Guest/Host »-Zellen sind für vollen Anzeigekontrast Betriebsspannungen von mehr als 10 volt, z.B. ca. 12 Volt, erforderlich.

Der Schichtwiderstandswert der im Vergleichsversuch erhaltenen Reflektorschicht liegt unter 10 MΩ pro Quadrat und beträgt nur etwa 7 MΩ pro Quadrat.

## Beispiel 3 (Vergleich)

Es wird wie in Beispiel 2 mit der Abänderung gearbeitet, dass der Siebdruckpaste in Schritt (C) 2,5 % Glaslotpulver (Korngrössen von 0,5 bis 5 μm) zusätzlich zu den Aluminiumteilchen zugemischt werden.

Die erhaltenen Reflektorschichten zeigen eine etwas bessere Wischfestigkeit, als die von Beispiel 2, lassen sich aber praktisch nicht reiben und nur vergleichsweise (zu Beispiel 1) schlecht mit Silan beschichten. Der Schichtwiderstand liegt unter 10 MΩ pro Quadrat ; die Bindephase erweist sich visuell als inhomogen und die Aluminiumteilchen sind nicht in der Bindephase eingebettet, sondern nur bereichsweise verklebt.

## Beispiel 4

Es wird wie in Beispiel 1, jedoch mit folgender Abänderung der in den Abschnitten (B) und (C) beschriebenen Schritte gearbeitet :

B. Das Tetraethylsilicat (10 Teile) wird in 20 Teilen Isopropanol gelöst. Die erhaltene Lösung wird mit 0,2 Teilen konzentrierter wässriger HCl-Lösung (38 %ig) verrührt. Das Tetraethylsilicat wird auf diese Weise zu Kielselsäure hydrolysiert, die aber weder ausfällt noch zu einer störenden Viskositätserhöhung führt.

C. Die erhaltene Lösung wird mit dem temporären Bindemittel von Absatz (A), Beispiel 1, oder einem handelsüblichen Siebdruckbindemittel (für Dickfilmtechnik) und mit 5 Teilen der in Absatz (C), Beispiel 1, angegebenen Aluminiumteilchen durch intensives Rühren gleichmässig vermischt.

Bei im übrigen gleicher Arbeitsweise wie in den Absätzen (D), (E) und (F) von Beispiel 1 werden im wesentlichen gleiche Ergebnisse erhalten.

## Beispiel 5

Es wird wie in Beispiel 1, jedoch mit der Abänderung gearbeitet, dass durch Verminderung des Anteils an Aluminiumteilchen in Absatz (C) auf der Platte 2 eine halbtransparente Reflektorschicht 9 erhalten wird.

Eine damit hergestellte FK-Zelle 10 kann z.B. mit Hilfe einer Mikrolampe hinter der Zellenplatte 2 bei fehlendem Umgebungslicht in Transmission betrieben werden.

**Ansprüche**

1. Flüssigkristall-Anzeigezelle, die zwei mit Elektroden beschichtete Zellenplatten besitzt, welche eine Flüssigkristallmasse einschliessen, wobei die erste Zellenplatte transparent und die zweite Zellenplatte mindestens bereichsweise mit einer anhaftenden zelleninnseitigen Reflektorschicht (9) versehen ist, die schuppenförmige Aluminiumteilchen als Reflektorpartikel und eine Bindephase für diese enthält, dadurch gekennzeichnet, dass die Bindephase eine praktisch homogene, transparente und mindestens überwiegend aus $SiO_2$ bestehende schichtförmige mineralische Matrix (7) ist, in welcher die Aluminiumteilchen (6) eingebettet sind.

2. Zelle nach Anspruch 1, dadurch gekennzeichnet, dass die Reflektorschicht (9) eine mittlere Dicke von 0,3 bis 5 µm besitzt, vorzugsweise eine Dicke von 0,5 bis 2 bis 2 µm.

3. Zelle nach Anspruch 1 oder 2, dadurch gekennzeichnet, dass die Reflektorschicht (9) mindestens zu 20 % ihres Gewichtes aus $SiO_2$ und zum restlichen Teil praktisch aus den schuppenförmigen Aluminiumteilchen (6) besteht.

4. Verfahren zur Herstellung der Flüssigkristall-Anzeigezelle gemäss Anspruch 1 durch Zusammenbauen der Zelle mit den beiden innenseitig mit Elektroden beschichteten Zellenplatten und Einfüllen der Flüssigkristallmasse in den Raum zwischen den Zellenplatten, wobei auf die Elektrodenschichtseite der zweiten Zellenplatte zur Bildung der zelleninnenseitigen Reflektorschicht mindestens bereichsweise eine Schicht aus einer Mischung aufgetragen und erhitzt wird, die schuppenförmige Aluminiumteilchen enthält, dadurch gekennzeichnet, dass für die Herstellung der Mischung mindestens ein bei Normaltemperatur flüssiges organisches Orthosilicat der Formel (I)

$$\begin{array}{c} OR^1 \\ | \\ R^4O - Si - OR^2 \\ | \\ OR^3 \end{array}$$

in der $R^1$, $R^2$, $R^3$ und $R^4$ gleiche oder verschiedene einwertige organische Reste bedeuten, die in Form der entsprechenden Hydroxylverbindungen flüchtig sind, verwendet und vor, während oder nach dem Auftragen der Mischung zur Bildung von Kielselsäure hydrolysiert wird, und dass durch Erhitzen der so beschichteten zweiten Zellenplatte auf Temperaturen von 300 bis 550 °C eine an dieser Zellenplatte haftende Reflektorschicht gebildet wird, in welcher die schuppenförmigen Aluminiumteilchen in einer transparenten schichtförmigen Matrix eingebettet sind, die praktisch homogen ist und mindestens überwiegend aus $SiO_2$ besteht.

5. Verfahren nach Anspruch 1, dadurch gekennzeichnet, dass als Verbindung der Formel (I) eine solche verwendet wird, in der die Reste $R^1$, $R^2$, $R^3$ und $R^4$ Alkylgruppen mit 1 bis 4 C-Atomen sind.

6. Verfahren nach Anspruch 5, dadurch gekennzeichnet, dass die Reste $R^1$, $R^2$, $R^3$ und $R^4$ gleich sind und Ethylgruppen bedeuten.

7. Verfahren nach einem der Ansprüche 4 bis 6, dadurch gekennzeichnet, dass die Hydrolyse in Gegenwart einer Säure bewirkt wird.

8. Verfahren nach Anspruch 7, dadurch gekennzeichnet, dass als Säure eine flüchtige Mineralsäure, wie Salzsäure, verwendet wird.

9. Verfahren nach einem der Ansprüche 1 bis 5, dadurch gekennzeichnet, dass die Mischung als temporäres Bindemittel ein organisches Lösungsmittel sowie ein thermisch zersetzliches und in dem Lösungsmittel gelöstes organisches Verdickungsmittel enthält.

10. Verfahren nach einem der Ansprüche 4 bis 9, dadurch gekennzeichnet, dass die Mischung eine pastenförmige Konsistenz hat und durch ein Druckverfahren, wie Siebdruck, schichtförmig auf die mit der Reflektorschicht zu versehenden Bereiche der zweiten Zellenplatte aufgetragen wird.

11. Verfahren nach Anspruch 10, dadurch gekennzeichnet, dass die Schicht vor dem Erhitzen bei Temperaturen von 80 bis 150 °C getrocknet wird.

12. Platte für Flüssigkristall-Anzeigezellen, welche Platte mit Elektroden beschichtet ist und auf der mit Elektroden beschichteten Fläche mindestens bereichsweise eine anhaftende Reflektorschicht trägt, die schuppenförmige Aluminiumteilchen als Reflektorpartikel und eine Bindphase für diese enthält, dadurch gekennzeichnet, dass die Aluminiumteilchen (6) in einer transparenten mineralischen und praktisch homogenen schichtförmigen $SiO_2$-Matrix (7) eingebettet sind.

**Claims**

1. Liquid crystal display cell, having two cell plates which are coated with electrodes and which

enclose a liquid crystal mass, the first cell plate being transparent and the second cell plate being provided, at least zonally, with an adhering reflector layer (9) on the inside of the cell, which reflector layer contains flaky aluminium particles as the reflector particles and a binder phase for the latter, characterised in that the binder phase is a virtually homogeneous, transparent mineral matrix (7) which consists at least predominantly of $SiO_2$ and is in the form of a layer and in which the aluminium particles (6) are embedded.

2. Cell according to Claim 1, characterised in that the reflector layer (9) has a mean thickness of 0.3 to 5 μm preferably a thickness of 0.5 to 2 μm.

3. Cell according to Claim 1 or 2, characterised in that at least 20 % by weight of the reflector layer (9) consists of $SiO_2$ and the remainder virtually consists of the flaky aluminium particles (6).

4. Process for the manufacture of the liquid crystal display cell according to Claim 1, by assembling the cell having the two cell plates coated on the inside with electrodes, and filling the space between the cell plates with the liquid crystal mass, a layer of a mixture, which contains flaky aluminium particles, being applied at least zonally to the electrode layer side of the second cell plate in order to form the reflector layer on the inside of the cell, and being heated, characterised in that at least one organic orthosilicate which is liquid at normal temperature and is of the formula (I)

$$\begin{array}{c} OR^1 \\ | \\ R^4O - Si - OR^2 \\ | \\ OR^3 \end{array}$$

wherein $R^1$, $R^2$, $R^3$ and $R^4$ represent identical or different monovalent organic radicals which, in the form of the corresponding hydroxy compounds, are volatile, is used for the preparation of the mixture and is hydrolysed before, during or after the application of the mixture, in order to form silicic acid, and that, by heating the second cell plate thus coated to temperatures from 300 to 550 °C, a reflector layer is formed which adheres to this cell plate and in which the flaky aluminium particles are embedded in a transparent matrix which is in the form of a layer and which is virtually homogeneous and consists at least predominantly of $SiO_2$.

5. Process according to Claim 4, characterised in that the compound of the formula (I) which is used is a compound in which the radicals $R^1$, $R^2$, $R^3$ and $R^4$ are alkyl groups having 1 to 4 C atoms.

6. Process according to Claim 5, characterised in that the radicals $R^1$, $R^2$, $R^3$ and $R^4$ are identical and represent ethyl groups.

7. Process according to one of Claims 4 to 6, characterised in that the hydrolysis is carried out in the presence of an acid.

8. Process according to Claim 7, characterised in that the acid used is a volatile mineral acid, such as hydrochloric acid.

9. Process according to one of Claims 1 to 5, characterised in that the mixture contains, as the temporary binder, an organic solvent and an organic thickener which can be thermally decomposed and is dissolved in the solvent.

10. Process according to one of Claims 4 to 9, characterised in that the mixture is of pasty consistency and is applied by a printing process, such as screen printing, in the form of layers to those zones of the second cell plate which are to be provided with a reflector layer.

11. Process according to Claim 10, characterised in that the layer is dried at temperatures from 80 to 150 °C before it is heated.

12. Plate for liquid crystal display cells, which plate is coated with electrodes and carries, at least zonally, an adhering reflector layer on the surface coated with electrodes, which reflector layer contains flaky aluminium particles as the reflector particles and a binder phase for the latter, characterised in that the aluminium particles (6) are embedded in a transparent, mineral and virtually homogeneous $SiO_2$ matrix (7) in the form of a layer.

**Revendications**

1. Cellule d'affichage à cristaux liquides qui comprend deux plaques de cellule recouvertes d'électrodes qui confinent une masse de cristaux liquides, dont la première plaque de cellule est transparente et dont la seconde plaque de cellule est munie au moins localement d'une couche réfléchissante (9) adhérant du côté intérieur de la cellule qui contient des particules d'aluminium en forme d'écailles comme particules réfléchissantes et une phase liante pour celles-ci, caractérisée en ce que la phase liante est une matrice minérale (7) en forme de couche pratiquement homogène, transparente et consistant au moins principalement en $SiO_2$, dans laquelle les particules d'aluminium (6) sont noyées.

2. Cellule suivant la revendication 1, caractérisée en ce que la couche réfléchissante (9) a une épaisseur moyenne de 0,3 à 5 µm et de préférence une épaisseur de 0,5 à 2 µm.

3. Cellule suivant la revendication 1 ou 2, caractérisée en ce que la couche réfléchissante (9) est constituée pour au moins 20 % de son poids par du $SiO_2$ et pour le reste pratiquement par les particules d'aluminium (6) en forme d'écailles.

4. Procédé de fabrication d'une cellule d'affichage à cristaux liquides suivant la revendication 1 par construction de la cellule au moyen des deux plaques de cellule recouvertes intérieurement d'électrodes et introduction de la masse de cristaux liquides dans l'espace entre les plaques de cellule, suivant lequel, pour la formation de la couche réfléchissante intérieure de la cellule, on applique et on chauffe du côté de la couche électrode de la seconde plaque de cellule au moins localement une couche d'un mélange qui contient des particules d'aluminium en forme d'écailles, caractérisé en ce qu'on utilise pour la préparation du mélange au moins un orthosilicate organique liquide à la température ordinaire de formule (I)

$$\begin{array}{c} OR^1 \\ | \\ R^4O - Si - OR^2 \\ | \\ OR^3 \end{array}$$

où $R^1$, $R^2$, $R^3$ et $R^4$ représentent des radicaux organiques monovalents identiques ou différents qui sont volatils sous la forme des composés hydroxylés correspondants et on l'hydrolyse avant, pendant ou après l'application du mélange pour la formation d'acide silicique et par chauffage de la seconde plaque de cellule ainsi revêtue jusqu'à des températures de 300 à 500 °C, on forme une couche réfléchissante qui adhère sur cette plaque de cellule et dans laquelle les particules d'aluminium en forme d'écailles sont noyées dans une matrice en forme de couche transparente qui est pratiquement homogène et consiste au moins principalement en $SiO_2$.

5. Procédé suivant la revendication 4, caractérisé en ce qu'on utilise comme composé de formule (I) un composé dans lequel les radicaux $R^1$, $R^2$, $R^3$ et $R^4$ sont des radicaux alcoyle de 1 à 4 atomes de carbone.

6. Procédé suivant la revendication 5, caractérisé en ce que les radicaux $R^1$, $R^2$, $R^3$ et $R^4$ sont identiques et sont des radicaux éthyle.

7. Procédé suivant l'une quelconque des revendications 4 à 6, caractérisé en ce qu'on exécute l'hydrolyse en présence d'un acide.

8. Procédé suivant la revendication 7, caractérisé en ce qu'on utilise comme acide un acide minéral volatil, comme l'acide chlorhydrique.

9. Procédé suivant l'une quelconque des revendications 1 à 5, caractérisé en ce que le mélange contient comme liant temporaire un solvant organique ainsi qu'un épaississant organique thermiquement décomposable et dissous dans le solvant.

10. Procédé suivant l'une quelconque des revendications 4 à 9, caractérisé en ce que le mélange a une consistance pâteuse et est appliqué suivant un procédé d'impression, comme la sérigraphie, en couche sur les régions à munir d'une couche réfléchissante de la seconde plaque de cellule.

11. Procédé suivant la revendication 10, caractérisé en ce que la couche est séchée à des températures de 80 à 150 °C avant la cuisson.

12. Plaque pour cellule d'affichage à cristaux liquides, laquelle plaque est recouverte d'électrodes et porte sur la surface recouverte d'électrodes au moins localement une couche réfléchissante adhérente qui contient des particules d'aluminium en forme d'écailles comme particules réfléchissantes et une phase liante pour celles-ci, caractérisée en ce que les particules d'aluminium (6) sont noyées dans une matrice de $SiO_2$ (7) en forme de couche transparente minérale et pratiquement homogène.

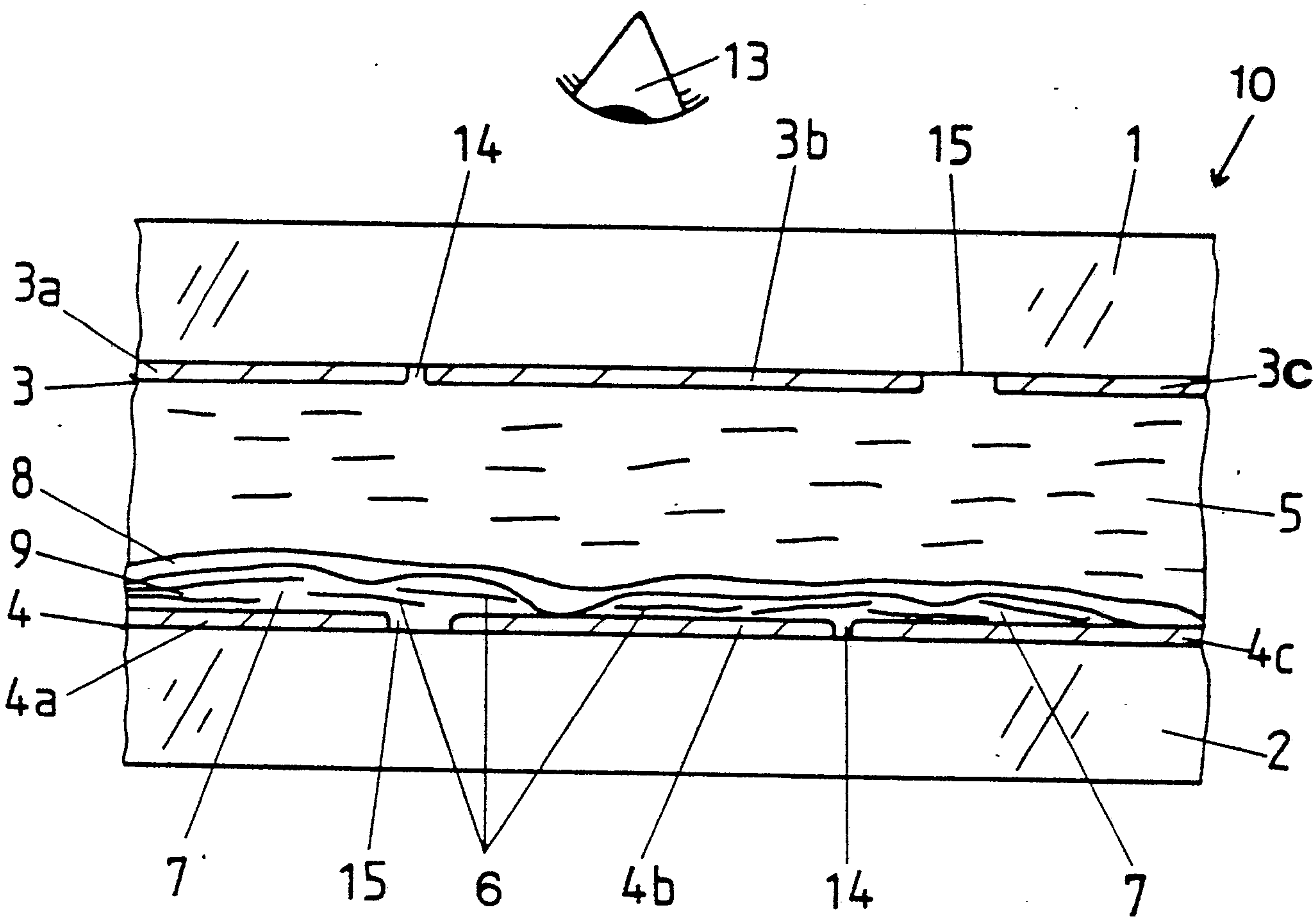


FIG.1

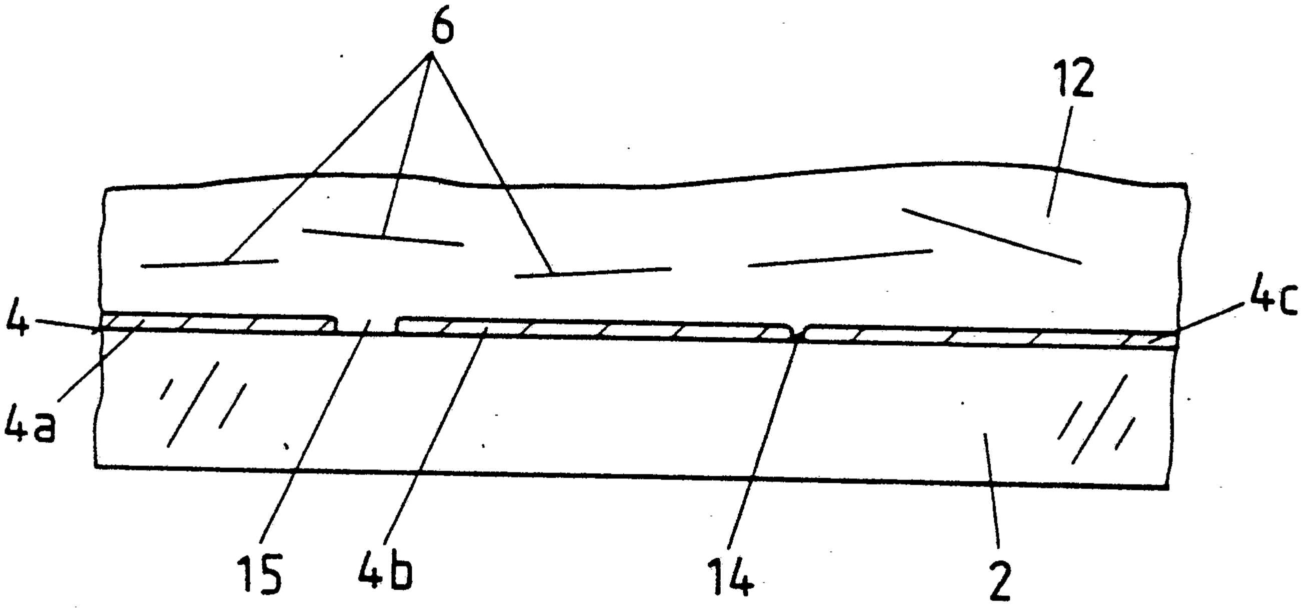


FIG.2